# EUROPÄISCHE PATENTSCHRIFT

(11) **EP 1 626 832 B1**
(45) Veröffentlichungstag und Bekanntmachung des Hinweises auf die Patenterteilung: **17.08.2011**
(21) Anmeldenummer: 04732069.2
(22) Anmeldetag: 11.05.2004
(51) Int. Cl.: B23K 9/133

(54) **PUFFERVORRICHTUNG FÜR EINEN SCHWEISSDRAHT SOWIE SCHWEISSANLAGE**
BUFFER DEVICE FOR A WELDING WIRE AND WELDING UNIT
DISPOSITIF D'AMORTISSEMENT POUR UN FIL DE SOUDURE ET POSTE DE SOUDURE

(30) Priorität: 28.05.2003 AT 8302003
(43) Veröffentlichungstag der Anmeldung: 22.02.2006
(73) Patentinhaber: Fronius International GmbH, 4643 Pettenbach (AT)
(72) Erfinder: SCHÖRGHUBER, Manfred, A-4600 Wels (AT); HAIDINGER, Bernhard, A-4600 Wels-Thalheim (AT)
(74) Vertreter: Sonn & Partner Patentanwälte
(86) Internationale Anmeldenummer: PCT/AT2004/000164
(87) Internationale Veröffentlichungsnummer: WO 2004/105992

(56) Entgegenhaltungen:
- DE-A- 3 827 508
- DE-A- 19 732 379
- GB-A- 1 463 004

## Beschreibung

Die Erfindung betrifft eine Puffervorrichtung für einen Schweißdraht nach dem Oberbegriff des Anspruchs 1. Eine derartige Puffer vorrichtung ist in US2004/0016736 A1 beschrieben.

Weiters betrifft die Erfindung eine Schweißanlage nach dem Oberbegriff des Anspruchs 15.

Bei den neuesten Schweißtechniken, bei deinen der Schweißdraht nicht mehr nur mit konstanter Geschwindigkeit in einer Richtung gefördert wird, sondern für die Zündung und/oder während des Schweißprozesses eine Vorwärts- und Rückwärtsbewegung oder unterschiedliche Fördergeschwindigkeiten durchgeführt werden, kommt der Drahtförderung eine große Bedeutung zu. Aufgrund der unterschiedlichen Drahtgeschwindigkeiten bzw. Förderrichtungen des Schweißdrahtes ergibt sich bei den derzeitigen Drahtfördersystemen das Problem, dass das Ansprechverhalten der Schweißdrahtförderung sehr träge ist und somit keine optimalen Schweißergebnisse erzielt werden können. Beispielsweise muss der Schweißdraht bei einer Umkehr der Laufrichtung, also von einer Vorwärtsbewegung in eine Rückwärtsbewegung, über das gesamte Schlauchpaket zurückgeschoben werden, wobei jedoch aufgrund des Nachlaufs des Schweißdrahtes und des Drahtvorschubes ein sehr träges Ansprechverhalten zustande kommt.

Bei derartigen Schweißdrahtförderungen mit unterschiedlichen Drahtgeschwindigkeiten bzw. unterschiedlichen Förderrichtungen, wird zum Abfangen des überschüssigen Schweißdrahtes ein Drahtpuffer bzw. ein Draht-Pufferspeicher eingesetzt, da meist nur eine von üblicherweise zwei Drahtvorschubeinrichtungen eine Richtungsumkehr durchführt.

Beispielsweise ist aus DE 197 38 785 C2 eine Vorrichtung zum Lichtbogenschweißen mit abschmelzender Elektrode bekannt, bei der der Schweißdraht von einer Vorratstrommel über zwei Drahtvorschubeinrichtungen an die Schweißstelle zugeführt wird. Dabei wird ein Kurzschluss-Schweißprozess beschrieben, bei dem die Schweißdrahtförderung vor Abschluss der Tropfenbildung eine den Übergang des Tropfens unterstützende Bewegung ausführt, d.h., dass beim Auftreten eines Kurzschlusses der Schweißdraht von der Drahtvorschubeinrichtung zurückgezogen wird und anschließend nach Erreichen eines vorgegebenen Abstandes wieder vorwärts bewegt wird, wobei dabei der Schweißdraht in einem Drahtpuffer transportiert wird. Die Ausbildung des Drahtpuffers ist dem Dokument jedoch nicht zu entnehmen.

Aus der DE 38 27 508 A1 ist eine Transportvorrichtung bekannt, bei der der Schweißdraht auch bei ungünstigen Krafteinwirkungen mit konstanter Kraft gefördert wird und Zug- bzw. Druckspannungen vermieden werden. Der Schweißdraht wird zwischen einem schiebenden Antrieb, der im Schweißgerät oder in einem Drahtvorschubgerät angeordnet ist, und einem ziehenden Antrieb, der bevorzugt im Bereich des Schweißbrenners oder im Schweißbrenner selbst angeordnet ist, durch einen ausweichenden Teil und einem gekrümmten Schlauch geführt. Die Schlauchspannung wird von einer Feder abgestützt. Das ausweichfähige Teil ist mit einem Steuerorgan gekoppelt, welches den Ausweichweg des ausweichenden Teiles bei Entstehen von Druck- oder Zugspannungen am Schweißdraht misst und einer Steuerung zur Kompensierung über eine Geschwindigkeitsregelung des ersten Antriebes zuführt. Bei dieser Lösung wird der Schweißdraht von der Vorratstrommel über den ersten Antrieb abgewickelt und in einen Schlauch bzw. eine hohle Drahtseele eingeführt. Die hohle Drahtseele ist anschließend freiliegend angeordnet und bildet in diesem freiliegenden Bereich den Draht-Pufferspeicher in Form einer Schlaufe aus, wobei sich die Schlaufe in diesem freiliegenden Bereich verformen kann, also die Schlaufe vergrößert oder verkleinert wird und somit mehr oder weniger Schweißdraht aufgenommen werden kann. Anschließend wird der Schlauch bzw. die hohle Drahtseele in das Schlauchpaket eingeführt und erstreckt sich bis zum weiteren ziehenden Antrieb, der bevorzugt im Bereich des Schweißbrenners oder im Schweißbrenner selbst angeordnet ist.

Eine weitere Ausbildung eines Drahtpuffers ist aus der DE 43 20 405 C2 bekannt, bei der eine Vorrichtung zur schlupffreien Förderung eines Schweißdrahtes beschrieben ist. Dabei wird wiederum zwischen zwei Drahtvorschubeinrichtungen ein Draht-Pufferspeicher bzw. Drahtpuffer gebildet, bei dem der Schweißdraht eine vollständige Drahtschlaufe bildet, bevor dieser in das Schlauchpaket eingeführt wird. Der Draht-Pufferspeicher wird also durch eine Schlaufe zwischen zwei voneinander beabstandeten Platten gebildet, deren gegenseitiger Abstand größer ist, als der Durchmesser des Schweißdrahtes. Um die Menge des Schweißdrahtes im Drahtpuffer zu überwachen, ist ein Sensor angeordnet, der den Durchmesser der Schlaufe des Schweißdrahtes erfasst.

Ein Draht-Pufferspeicher anderer Art bei dem eine Umlenkung des Schweißdrahtes über Umlenkrollen realisiert wird, ist aus der DE 101 00 164 A1 bekannt. Der Draht-Pufferspeicher ist zwischen der Vorratstrommel und einer Drahtvorschubeinrichtung angeordnet, wobei anschließend an die Drahtvorschubeinrichtung der Schweißdraht wiederum in eine hohle Drahtseele eingeführt wird, die sich in einem Schlauchpaket bis zu einer weiteren Drahtvorschubeinrichtung oder dem Schweißbrenner erstreckt.

Ein Schweißgerät mit einer Puffervorrichtung der gegenständlichen Art ist in der EP 1 384 548 A1 geoffenbart. Zur Änderung des Speichervolumens innerhalb des Draht-Pufferspeichers bei der Rückbewegung des Schweißdrahtes wirken auf diesen relativ hohe Kräfte, welche das dynamische Verhalten negativ beeinflussen.

Nachteilig ist bei den zuvor beschriebenen Systemen, dass für diese Art des Drahtpuffers bzw. des Draht-Pufferspeichers ein sehr großer Platzbedarf notwendig ist, wodurch eine Anwendung nur im Bereich des Schweißgerätes bzw. des Drahtvorschubgerätes oder als Extragerät sinnvoll realisiert werden kann. Der Schweißdraht muss somit vom Drahtpuffer weg über das gesamte Schlauchpaket an den Schweißbrenner gefördert werden, so dass hier große Reibungsverluste auftreten und das Ansprechverhalten der Drahtförderung nicht wesentlich verbessert wird. Diese Reibungsverluste und die große Trägheit der Drahtförderung treten deshalb auf, da bei den bekannten Drahtförderungen der Schweißdraht in einer hohlen Drahtseele verläuft, die in einem Führungsrohr bevorzugt im Schlauchpaket eingeschoben wird, wobei der Innendurchmesser des Führungsschlauches nur unwesentlich größer ist, als der Außendurchmesser der Drahtseele. Somit wird eine exakte Führung der Drahtseele erreicht, jedoch muss beispielsweise bei einer Förderrichtungsumkehr der Schweißdraht über die gesamte Länge der Drahtseele, also des Schlauchpaketes, zurück in den Draht-Pufferspeicher geschoben werden.

Die Aufgabe der vorliegenden Erfindung besteht daher in der Schaffung einer Puffervorrichtung für einen Schweißdraht, bei dem ein sehr einfacher und kompakter Aufbau geschaffen wird. Eine weitere Aufgabe liegt darin, dass die Drahtelektrode einer Drahtvorschubeinrichtung, die im Wesentlichen im Bereich des Schweißbrenners angeordnet ist, kraftfrei zur Verfügung gestellt wird. Eine weitere Aufgabe der vorliegenden Erfindung besteht auch darin, dass das dynamische Verhalten der Drahtförderung verbessert wird.

Eine weitere Aufgabe der Erfindung besteht in der Schaffung einer gegenständlichen Schweißanlage, welche möglichst einfach und kompakt aufgebaut ist und mit der das dynamische Verhalten der Förderung des Schweißdrahtes verbessert wird.

Die erfindungsgemäßen Aufgaben werden dadurch gelöst, dass der Draht-Pufferspeicher derart gebildet ist, dass die Drahtseele zumindest in einem Teilbereich in einem helixförmig bzw. spiral-förmig vorverformt verlaufendem Drahtführungsschlauch mit größerem Querschnitt bzw. Innendurchmesser als ein Querschnitt bzw. Außendurchmesser der Drahtseele frei beweglich angeordnet ist, und dass das Speichervolumen des Draht-Pufferspeichers durch den Querschnitt und die Länge des Drahtführungsschlauches definiert ist.

Damit wird in vorteilhafter Weise erreicht, dass der Drahtführungsschlauch als Draht-Pufferspeicher dient, da die Drahtseele sich im größeren Drahtführungsschlauch frei bewegen kann, also ausweichen kann, und somit den überschüssigen Schweißdraht beispielsweise bei einer Rückwärtsförderung aufnehmen kann. Somit ist es nicht mehr erforderlich, dass der Schweißdraht durch die gesamte Drahtseele zurückgeschoben werden muss, sondern dass sich der Schweißdraht und die Drahtseele im Drahtführungsschlauch frei bewegen kann und somit als Ausgleich den überschüssigen Schweißdraht aufnehmen kann. Damit wird also erreicht, dass keine Verschiebung des Schweißdrahtes durch die Drahtseele in den Draht-Pufferspeicher bei einer Rückwärtsbewegung des Schweißdrahtes vom Drahtvorschub im Bereich des Schweißbrenners vorgenommen werden muss, sondern direkt die Drahtseele im Drahtführungsschlauch verformt wird und somit der überschüssige Schweißdraht durch die Verformung aufgenommen werden kann, wogegen beim Stand der Technik der Schweißdraht zuerst durch die Drahtseele im Schlauchpaket zurückgeschoben werden muss, da kein bzw. nur ein minimales Ausweichen der Drahtseele im Drahtführungsschlauch möglich ist, bevor im freiliegenden Bereich der Drahtseele eine Verformung der Drahtseele stattfinden kann und der überschüssige Schweißdraht aufgenommen wird. Ein weiterer sehr wesentlicher Vorteil liegt darin, dass der Draht-Pufferspeicher nunmehr direkt im Bereich der weiteren Drahtvorschubeinrichtung bzw. des Schweißbrenners, also hinter der Drahtvorschubeinrichtung bzw. dem Schweißbrenner, angeordnet ist, so dass der Schweißdraht nicht mehr über das Schlauchpaket zurückgeschoben werden muss. Damit wird das Ansprechverhalten beim Ändern der Förderrichtung des Schweißdrahtes wesentlich verbessert und es ist eine sehr rasche Richtungsumkehr möglich. Auch werden dadurch die Reibungsverluste stark minimiert, da sich die Drahtseele mit dem Schweißdraht im Draht-Pufferspeicher verschieben kann und keine Bewegung, insbesondere Rückwärtsbewegung, in der Drahtseele beim Rückwärtsfördern des Schweißdrahtes mehr zustande kommt. Ein weiterer Vorteil liegt auch darin, dass durch die Ausbildung des Draht-Pufferspeichers direkt hinter dem Schweißbrenner die Drahtvorschubeinrichtung bzw. der Antriebsmotor sehr klein dimensioniert werden kann, da dieser keinerlei Reibungskräfte bei der Drahtförderung überwinden muss und somit ein sehr kleiner und leichter Antriebsmotor eingesetzt werden kann, wodurch die Baugröße des Schweißbrenners bzw. des Antriebselementes beim Schweißbrenner minimiert werden kann. Damit wird die Zugänglichkeit bei automatischen Schweißanlagen wesentlich verbessert. Durch den helixförmigen bzw. spiralförmigen Verlauf des Drahtführungsschlauches wird die Länge des Drahtführungsschlauches vergrößert, so dass der Drahtpufferinhalt, also das Speichervolumen zum Aufnehmen des überschüssigen Schweißdrahtes, wesentlich vergrößert werden kann.

Es ist aber auch eine Ausbildung nach den Ansprüchen 2 und 3 von Vorteil, da dadurch ein Ausweichen der Drahtseele im vergrößerten Drahtführungsschlauch möglich ist. Damit wird in vorteilhafter Weise erreicht, dass über die Länge des vergrößerten Drahtführungsschlauches der Drahtpuffer auf einfache Art realisiert wird und somit ein sehr großer Draht-Pufferspeicher mit kleinen räumlichen Ausmaßen geschaffen werden kann.

Von Vorteil ist auch eine Ausgestaltung nach den Ansprüchen 4 bis 6, da es dadurch möglich ist, dass durch einfaches Austauschen des Schlauchpaketes bereits bestehende Anlagen mit einem derartigen Draht-Pufferspeicher nachgerüstet werden können. Somit müssen keinerlei Umbauten oder zusätzliche Geräte, die den Draht-Pufferspeicher ausbilden, bei bestehenden Anlagen vorgenommen werden, wie dies beim Stand der Technik der Fall ist.

Durch die Ausgestaltung nach den Ansprüchen 7 bis 9 wird in vorteilhafter Weise erreicht, dass unabhängig vom Schlauchpaket eine Drahtförderung möglich ist, wobei der Draht-Pufferspeicher wiederum durch den Drahtführungsschlauch gebildet wird.

Vorteilhaft ist auch eine Ausgestaltung nach Anspruch 10, da dadurch in einfacher Form der Füllstand des Drahtpuffers bzw. die Menge des im Drahtpuffer gespeicherten Schweißdrahtes ausgewertet werden kann.

Es ist auch eine Ausbildung nach einem oder mehreren der Ansprüche 11 bis 14 von Vorteil, da dadurch ein sehr rascher Tausch des Drahtführungsschlauches vorgenommen werden kann und somit die Standzeit der Anlage während der keine Schweißung vorgenommen werden kann sehr kurz gehalten werden kann.

Weiters wird die Aufgabe der Erfindung durch eine Schweißanlage der gegenständlichen Art gelöst, bei der die Vorrichtung bzw. der Draht-Pufferspeicher derart gebildet ist, dass die Drahtseele mit dem Schweißdraht zumindest in einem Teilbereich in einem helix-förmig bzw. spiral-förmig vorverformt verlaufenden Drahtführungsschlauch mit größerem Querschnitt bzw. Innendurchmesser als ein Querschnitt- bzw. Außendurchmesser der Drahtseele frei beweglich angeordnet ist, das Speichervolumen des Draht-Pufferspeichers durch den Querschnitt und die Länge des Drahtführungsschlauches definiert ist, und die als Draht-Pufferspeicher ausgebildete Vorrichtung im oder um das Schlauchpaket ausgebildet ist. Vorteilhaft ist hierbei, dass eine sehr hohe Dynamik bei der Schweißdrahtförderung mit unterschiedlichen Drahtfördergeschwindigkeiten oder eine Vor-/Rückwärtsbewegung während eines Schweißprozesses erreicht wird.

Die vorliegende Erfindung wird anhand der beigefügten Zeichnungen, welche Ausführungsbeispiele des Draht-Pufferspeichers beschreiben, näher erläutert.

Darin zeigen:
Fig. 1 eine schematische Darstellung einer Schweißmaschine bzw. eines Schweißgerätes;
Fig. 2 eine schematische Darstellung eines Schlauchpaketes, wie es aus dem Stand der Technik üblich ist;
Fig. 3 eine schematische Darstellung eines neuartigen Schlauchpaketes mit helix-förmigem Drahtführungsschlauch;
Fig. 4 ein Schlauchpaket mit außenliegendem helix-förmigem Drahtführungsschlauch;
Fig. 5 eine schematische Darstellung des Speicherprinzips eines Draht-Pufferspeichers mit minimalem Speichervolumen;
Fig. 6 eine weitere schematische Darstellung des Speicherprinzips gemäß Fig. 5 mit maximalem Speichervolumen;
Fig. 7 bis 11 eine schematische Darstellung einer Schweißanlage mit unterschiedlichen Ausbildungen;
Fig. 12 eine andere Ausführungsvariante zur Bildung eines Draht-Pufferspeichers;
Fig. 13 eine schaubildliche Darstellung eines Sensors zum Erfassen der Drahtseelenbewegung;
Fig. 14 ein weiteres Ausführungsbeispiel des Sensors zum Erfassen der Drahtseelenbewegung;
Fig. 15 eine schaubildliche Darstellung des Draht-Pufferspeichers mit einer Steckverbindung; und
Fig. 16 eine schematische Darstellung der Steckverbindung.

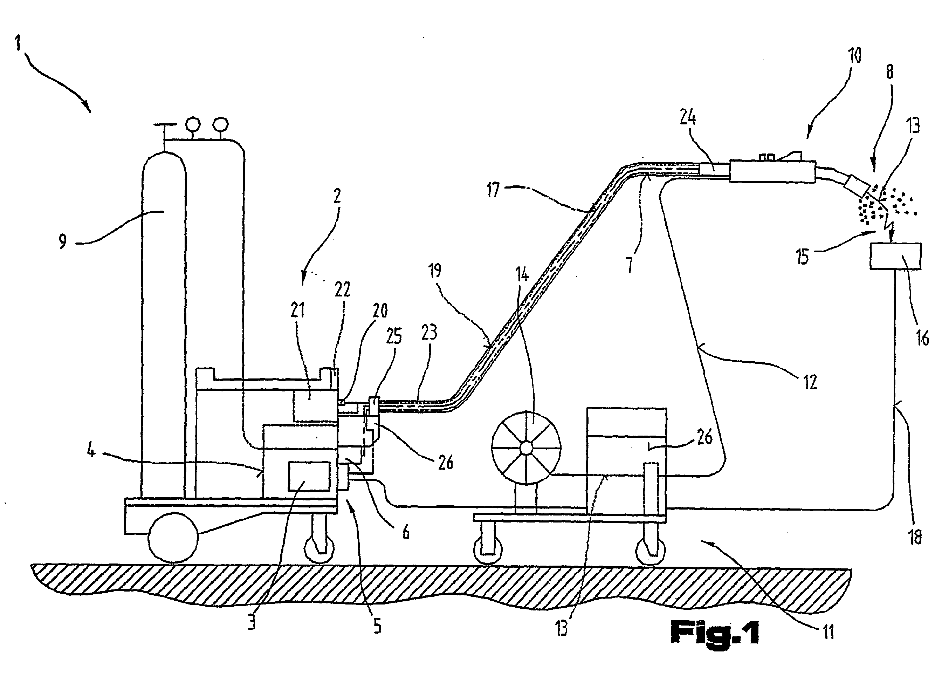

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der Elektrode und einem Werkstück 16 wird über eine Schweißleitung 17 vom Leistungsteil 3 der Stromquelle 2 dem Brenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

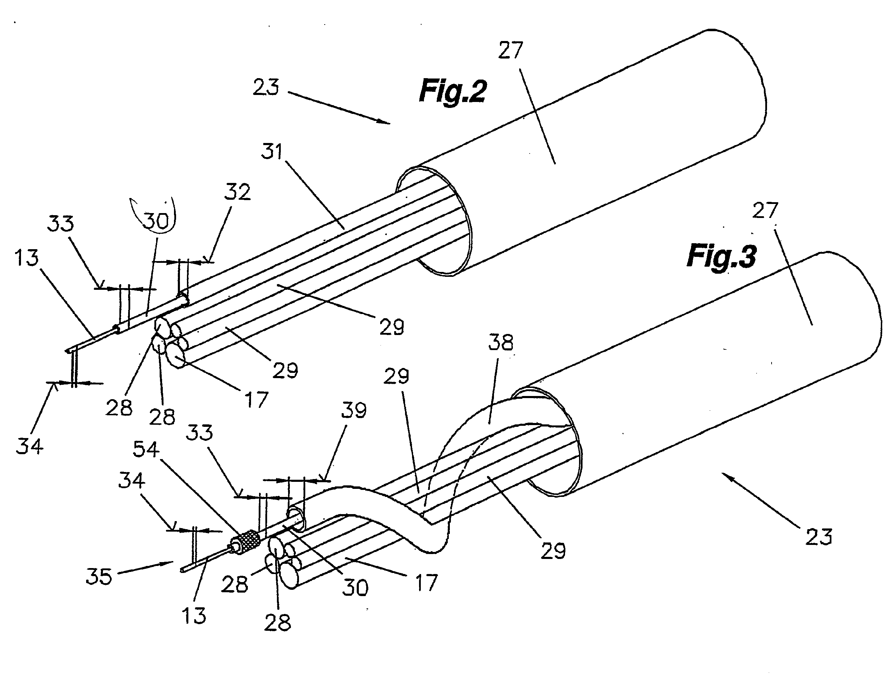

In Fig. 2 ist ein Teilausschnitt eines Schlauchpaketes 23 aus dem Stand der Technik schematisch dargestellt. Dabei sind innerhalb eines Schutzmantels 27 die für einen Schweißprozess benötigten Leitungen, beispielsweise eine Stromleitung bzw. Schweißleitung 17, Kühlleitungen 28 für einen flüssigkeitsgekühlten Schweißbrenner 10 und eine oder mehrere Steuerleitungen 29, angeordnet.

Der für einen Schweißprozess benötigte Schweißdraht 13 wird derart vom Schweißgerät 1 bzw. einem Drahtvorschubgerät 11 über das Schlauchpaket 23 befördert, indem dieser in eine Drahtseele 30 eingeführt wird. Die Drahtseele 30 wird vor dem Einfädeln des Schweißdrahtes 13 in einen Drahtführungsschlauch 31 eingeschoben, der im Schlauchpaket 23 angeordnet ist. Dabei weist der Drahtführungsschlauch 31 nur einen unwesentlich größeren Innendurchmesser 32 gegenüber einem Außendurchmesser 33 der Drahtseele 30 auf. Dies hat den Vorteil, dass die Drahtseele 30 exakt geführt wird und für unterschiedliche Schweißdrahtdurchmesser die Drahtseele 30 einfach ausgetauscht werden kann. Dies erfolgt deshalb, da in einer Schweißanlage unterschiedliche Schweißdrähte 13 mit unterschiedlichen Durchmessern 34 eingesetzt werden, wobei durch einfachen Austausch der Drahtseele 30 jeder beliebige Schweißdraht 13 mit einer entsprechend dazupassenden Drahtseele 30 eingesetzt werden kann und somit eine optimale Anpassung der Drahtseele 30 an den Durchmesser 34 des Schweißdrahtes 13 vorgenommen werden kann. Der Außendurchmesser 33 der Drahtseele 30 für die unterschiedlichsten Durchmesser 34 der Schweißdrähte 13 bleibt dabei annähernd gleich, so dass eine möglichst spielfreie Führung des Schweißdrahtes der Drahtseele 30 erreicht wird.

In den Fig. 3 bis 12 sind Ausführungsbeispiele zur Bildung einer Puffervorrichtung für den Schweißdraht 13, also eines Drahtpuffers bzw. Draht-Pufferspeichers 35, gezeigt, wobei die erfindungsgemäße Lösung jedoch nicht auf die dargestellten Ausführungsbeispiele beschränkt ist.

Wesentlich ist bei der erfindungsgemäßen Lösung, dass zwischen einer Drahtvorschubeinrichtung 36 am Schweißgerät 1 oder einem externen Drahtvorschubgerät 11 und einer weiteren Drahtvorschubeinrichtung 37, die bevorzugt im Bereich des Schweißbrenners 10 oder im Schweißbrenner 10 selbst positioniert ist, der Draht-Pufferspeicher 35 angeordnet ist, wobei der Schweißdraht 13 zwischen den beiden Drahtvorschubeinrichtungen 36, 37 bevorzugt in der Drahtseele 30 geführt ist. Der Draht-Pufferspeicher 35 ist derart gebildet, dass die Drahtseele 30 mit dem Schweißdraht 13 zumindest in einem Teilbereich in einem Drahtführungsschlauch 38 mit wesentlich größerem Querschnitt 39 bzw. Innendurchmesser als ein Querschnitt bzw. Außendurchmesser 33 der Drahtseele 30 angeordnet ist, wobei das Speichervolumen des Draht-Pufferspeichers 35 durch den Querschnitt 39 und die Länge des wesentlich größeren Drahtführungsschlauches 38 definiert ist.

Gemäß dem Stand der Technik, wie er in Fig. 2 dargestellt wird, ist der Drahtführungsschlauch 31 nur unwesentlich größer als der Außendurchmesser 33 der Drahtseele 30 ausgeführt. Bei der erfindungsgemäßen Lösung beispielsweise gemäß Fig.3 dagegen ist der Innendurchmesser bzw. Querschnitt 39 des Drahtführungsschlauches 38 größer, vorzugsweise mindestens 1,5mal größer als der Außendurchmesser 33 bzw. Querschnitt der Drahtseele 30. Die Drahtseele 30 ist dabei frei beweglich im Drahtführungsschlauch 38 angeordnet. Weiters kann der Drahtführungsschlauch 38 helixförmig bzw. spiral-förmig im Schlauchpaket 23 verlaufen, während beim Stand der Technik, gemäß Fig. 2, der Drahtführungsschlauch 31 im Wesentlichen geradlinig durch das Schlauchpaket 23 verläuft. Selbstverständlich wäre es auch möglich, den wesentlich größeren Drahtführungsschlauch 38 ebenfalls geradlinig im Schlauchpaket 23 anzuordnen. Der Vorteil des helix-förmigen bzw. spiral-förmigen Verlaufes des Drahtführungsschlauches 38 liegt jedoch darin, dass dadurch die Drahtseele 30 leicht gekrümmt wird, so dass eine leichtere Verformung der Drahtseele 30, wie beispielsweise bei einer Feder, ermöglicht wird.

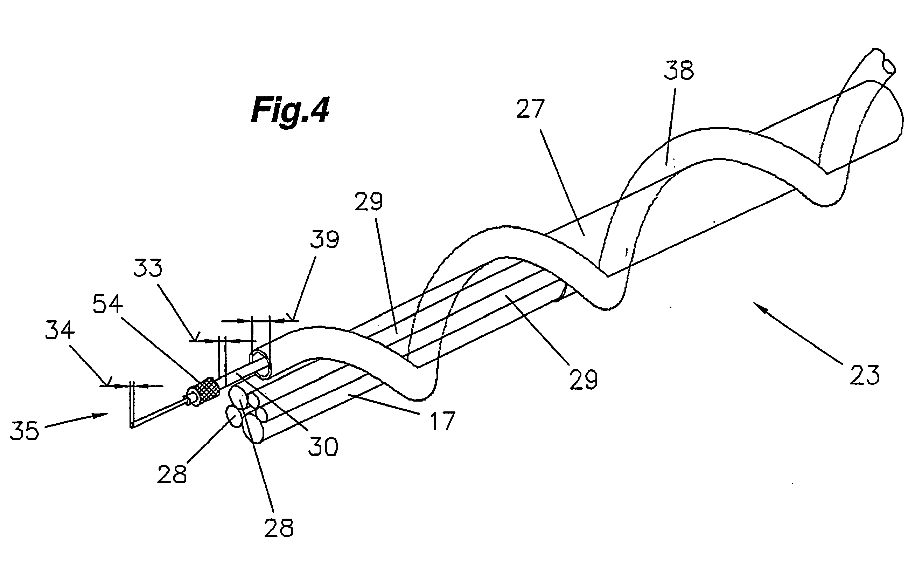

Es ist auch möglich, dass der Drahtführungsschlauch 38 außerhalb des Schlauchpakets 23 angeordnet ist, wie in Fig. 4 schematisch dargestellt. Dabei verläuft der Drahtführungsschlauch 38 bevorzugt wiederum helix-förmig bzw. spiral-förmig um das Schlauchpaket 23. Weiters ist es möglich, dass der Drahtführungsschlauch 38 unabhängig vom Schlauchpaket 23 angeordnet ist, und beispielsweise helix-förmig bzw. spiral-förmig um ein Trägermaterial oder eine beliebige Leitung des Schweißsystems, welche ebenfalls außerhalb des Schlauchpaketes 23 angeordnet ist, verläuft.

Durch die helix-förmige Anordnung des Drahtführungsschlauches 38 wird in vorteilhafter Weise erreicht, dass die Länge des Drahtführungsschlauches 38 zwischen den beiden Enden des Schlauchpaketes 23 gegenüber den anderen im Schlauchpaket 23 angeordneten Leitungen verlängert werden kann und somit mit dem Querschnitt 39 des Drahtführungsschlauches 38 eine definierte Puffergröße geschaffen werden kann, d.h., dass sich die Puffergröße durch die Differenz der Schraublinienlängen am Außen- und Innendurchmesser des Drahtführungsschlauches 38 ergibt. Die im Schlauchpaket 23 üblicherweise im Wesentlichen geradlinig angeordneten weiteren Leitungen liegen bevorzugt innerhalb des helix-förmig bzw. spiral-förmig verlaufenden Drahtführungsschlauches 38. Selbstverständlich ist es möglich, dass die weiteren Leitungen ebenfalls helix-förmig im Schlauchpaket 23 verlaufen, also der Drahtführungsschlauch 38 mit den weiteren Leitungen sozusagen verdrillt ist.

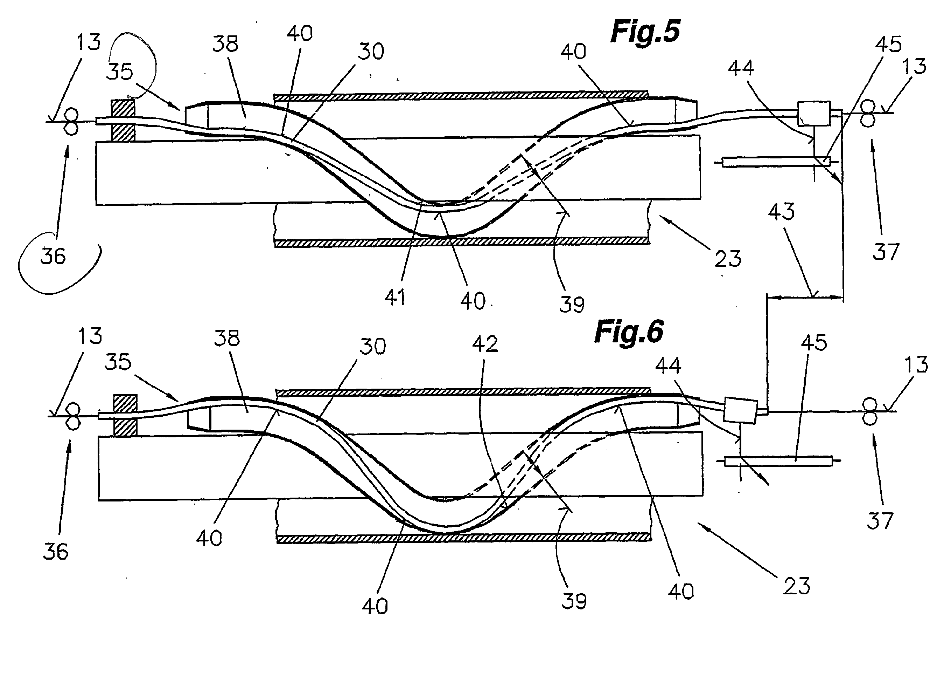

Das Funktionsprinzip der erfindungsgemäßen Puffervorrichtung, also des Draht-Pufferspeichers 35, ist in den Fig. 5 und 6 dargestellt. Dabei erstreckt sich der Draht-Pufferspeicher 35 zwischen zwei Drahtvorschubeinrichtungen 36, 37. Die Drahtseele 30 ist an einem Ende, bevorzugt im Bereich des Schweißgerätes 1 oder des externen Drahtvorschubgerätes 11, bei dem der Schweißdraht 13 von der Drahtrolle in die Drahtseele 30 eingeführt wird, befestigt bzw. fixiert, wogegen das weitere Ende der Drahtseele 30 frei beweglich ist und bevorzugt im Bereich des Schweißbrenners 10 endet. Dadurch kann sich die Drahtseele 30 in dem Drahtführungsschlauch 38 frei bewegen. Gleichzeitig kann das freie Ende der Drahtseele 30 in Abhängigkeit des Krümmungszustandes der Drahtseele 30 im Drahtführungsschlauch 38, also in Abhängigkeit des Speicherzustandes eine Längsbewegung durchführen.

Durch die bevorzugte helix-förmige Ausbildung des Drahtführungsschlauches 38 wird also erreicht, dass die Drahtseele 30 ebenfalls helix-förmig verläuft und damit definierte Radien 40 für den Schweißdraht 13 und somit auch für die Drahtseele 30 geschaffen werden. Durch Verändern der Radien 40, also der Lage der Drahtseele 30 im Drahtführungsschlauch 38, wird nunmehr der Draht-Pufferspeicher 35 gebildet. Dabei ist in Fig. 5 die Puffervorrichtung mit minimalem Speichervolumen und in Fig. 6 die Puffervorrichtung mit maximalem Speichervolumen schematisch dargestellt. Daraus ist ersichtlich, dass bei minimalem Speichervolumen die Drahtseele 30 an einer Innenseite 41 des Drahtführungsschlauches 38 anliegt und sehr große Radien 40 ausbilden, wogegen bei maximalem Speichervolumen die Drahtseele 30 an einer Außenseite 42 des Drahtführungsschlauches 38 zum Anliegen kommt und die Radien 40 der Drahtseele 30 kleiner ausgebildet sind. Weiters ist daraus ersichtlich, dass aufgrund der unterschiedlichen Speicherzustände eine Bewegung, insbesondere Längsbewegung, der Drahtseele 30 durchgeführt wird, wie eine Längenänderung 43 des freien Endes der Drahtseele 30 zeigt.

Durch die Ausbildung eines derartigen Draht-Pufferspeichers 35 ist es möglich, dass bei unterschiedlichen Drahtgeschwindigkeiten bzw. Förderrichtungen der Schweißdraht 13, insbesondere die überschüssige Länge des Schweißdrahtes 13, im Draht-Pufferspeicher 35 durch Veränderung der Radien 40 der Drahtseele 30 aufgefangen wird und der Schweißdraht 13 nicht, wie aus dem Stand der Technik bekannt, über das gesamte Schlauchpaket 13 zurückgeschoben werden muss. Es kann somit grundsätzlich bei der erfindungsgemäßen Lösung gesagt werden, dass je nach Ausbildung des Drahtführungsschlauches 38, also der Länge und des Querschnittes 39, unterschiedliche Speichervolumina für den Schweißdraht 13 geschaffen werden können, d.h., dass der Draht-Pufferspeicher 35 weniger oder mehr überschüssigen Schweißdraht 13 aufnehmen kann. Dadurch ist es möglich, dass durch Austausch des Drahtführungsschlauches 38 bzw. des Schlauchpaketes 23 eine Anpassung des benötigten Speichervolumens vorgenommen werden kann.

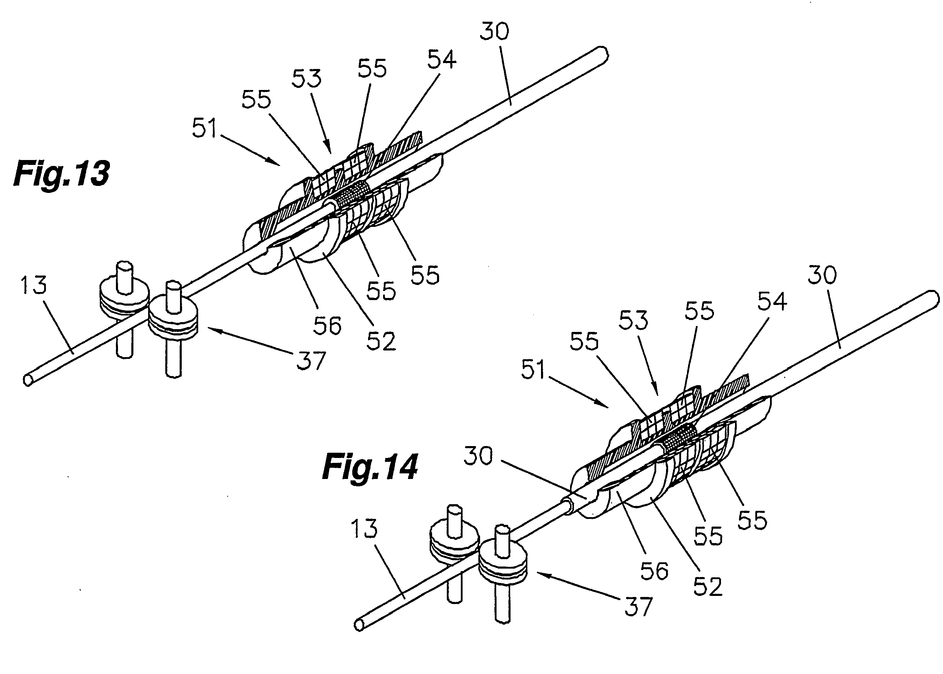

Damit eine optimale Schweißdrahtförderung mit einem derartigen Draht-Pufferspeicher 35 durchgeführt werden kann, sind Mittel zum Erfassen des Füllstandes bzw. Speicherzustandes des Draht-Pufferspeichers 35 angeordnet, wobei die Erfassungsmittel die Längsbewegung der Drahtseele 30 erfassen bzw. bestimmen und so auf den Füllzustand des Draht-Pufferspeichers 35 rückgeschlossen werden können. Dies kann beispielsweise in einfacher Form derart erfolgen, dass das freie Ende der Drahtseele 30 über einen Mitnehmerarm 44 mit einem Potentiometer 45 oder Inkrementalgeber gekoppelt ist, so dass aufgrund der Längenänderung 43 der Drahtseele 30 von einer Steuervorrichtung 4 auf den Füllstand des Draht-Pufferspeichers 35 rückgeschlossen werden kann, wie dies schematisch in den Fig. 5 und 6 eingezeichnet ist. Es ist jedoch auch möglich, andere Sensoren zum Erfassen des Füllstandes einzusetzen, wie nachstehend in den Fig. 13 und 14 noch beschrieben wird.

Der wesentliche Vorteil einer derartig länglichen Ausbildung des Draht-Pufferspeichers 35 liegt darin, dass der Draht-Pufferspeicher 35 direkt hinter dem Schweißbrenner 10 angeordnet wird, wodurch kaum zusätzliche Reibungsverluste in der Schweißdrahtförderung auftreten. Ein weiterer Vorteil liegt darin, dass der Draht-Pufferspeicher 35 direkt in das Schlauchpaket 23 integriert ist bzw. um das Schlauchpaket 23 verlegt werden kann, wodurch jederzeit ältere Anlagen mit einem derartigen Draht-Pufferspeicher 35 ausgestattet bzw. nachgerüstet werden können. Auch wird durch die längliche Ausrichtung der Puffervorrichtung das Handling für Roboteranwendung nicht maßgebend beeinträchtigt.

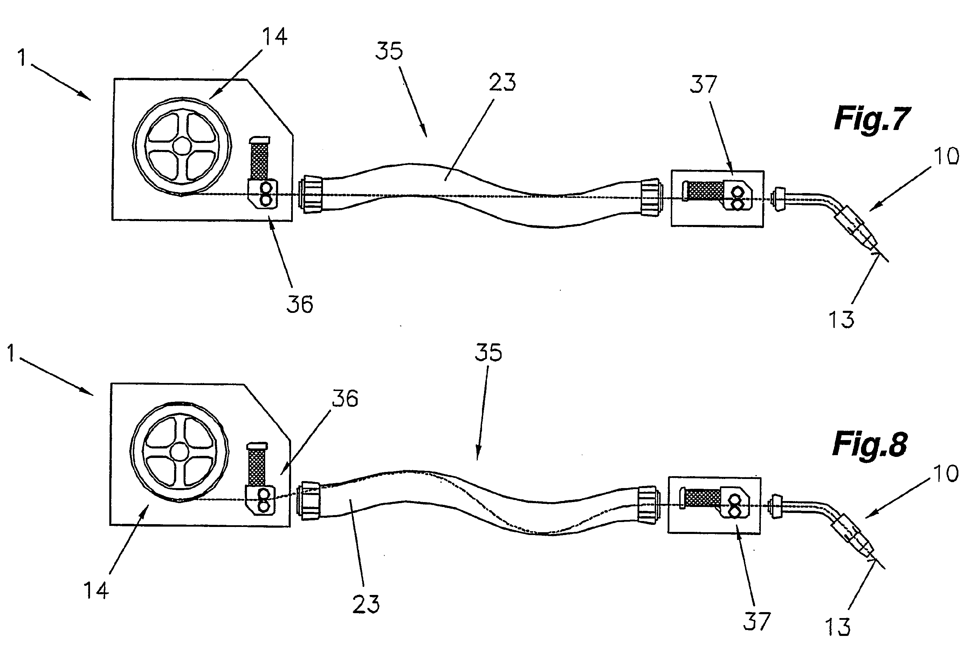

Bei den weiteren schematisch dargestellten Schweißsystemen gemäß den Fig. 7 bis 12 soll die Anwendung der Puffervorrichtung, also des Draht-Pufferspeichers 35, in unterschiedlich aufgebauten Schweißanlagen verdeutlicht werden. Dabei werden die Schweißanlagen nur schematisch in Form von Funktionsblöcken dargestellt.

Grundsätzlich ist hierzu zu erwähnen, dass bei einer Anordnung des Draht-Pufferspeichers 35 dieser auch inaktiv eingesetzt werden kann, d.h., dass die Funktion des Draht-Pufferspeichers 35 außer Betrieb ist, ohne dass dabei vom Benutzer irgendwelche Vorkehrungen getroffen werden müssen. Somit können auch standardmäßige Schweißprozesse durchgeführt werden, bei denen keine Speicherung überschüssigen Schweißdrahtes 13 notwendig ist. Dabei wird sich beispielsweise bei einer ausschließlichen Vorwärtsförderung des Schweißdrahtes 13 je nach Steuerung der Drahtvorschubeinrichtungen 36, 37 die Drahtseele 30 auf einen Minimum- oder Maximumzustand einstellen und es kann ein üblicher Schweißprozess durchgeführt werden.

In Fig. 7 ist eine Schweißanlage gezeigt, mit einem Schweißgerät 1, in dem die Vorratstrommel 14 bzw. die Drahtrolle und eine erste Drahtvorschubeinrichtung 36 angeordnet ist, einem Schlauchpaket 23 mit integriertem Draht-Pufferspeicher 35, einer weiteren Drahtvorschubeinrichtung 37 und einem Schweißbrenner 10. Die im Schweißgerät 1 angeordnete Drahtvorschubeinrichtung 36 zieht dabei den Schweißdraht 13 von der Vorratstrommel 14 und fördert diesen über die Drahtseele 30 (nicht dargestellt) zu einer weiteren Drahtvorschubeinrichtung 37 und von dieser über den Schweißbrenner 10 zum Schweißprozess.

Hierbei ist es möglich, dass die erste Drahtvorschubeinrichtung 36, also jene im Schweißgerät, als sog. Master-Antrieb (Hauptantrieb) betrieben wird und die weitere Drahtvorschubeinrichtung 37 als sog. Slave-Antrieb (Hilfsantrieb) dient. Der Slave-Antrieb wird dabei mit einer etwas höheren Drehzahl betrieben, wodurch der Schweißdraht 13 im Schlauchpaket 23 und somit im Draht-Pufferspeicher 35 auf Zugspannung gehalten wird, wie dies schematisch mit einer geraden Linie eingezeichnet ist. In diesem Anwendungsfall ist das Speichervolumen des Draht-Pufferspeichers 35 fast immer auf Minimum-Stellung, entsprechend Fig. 5, wobei der Draht-Pufferspeicher 35 inaktiv ist.

Der Vorteil einer derartigen Regelung, liegt darin, dass eine sehr einfache Regelung der beiden Drahtvorschubeinrichtungen 36, 37 erreicht wird, weil der Master-Antrieb immer mit konstanter Drehzahl betrieben werden kann. Wird beispielsweise die Drehzahl des Slave-Antriebes kurzzeitig reduziert oder es kommt zum Durchrutschen der Antriebsrollen beim Slave-Antrieb, so muss keinerlei Regelung des Master-Antriebes vorgenommen werden, da der kurzzeitige Überschuss an Schweißdraht 13, der durch den Master-Antrieb gefördert wird, vom Draht-Pufferspeicher 35 aufgenommen werden kann.

Bei der Anwendung in Fig. 8 wird die im Schweißgerät 1 angeordnete Drahtvorschubeinrichtung 36 als Slave-Antrieb und die im Bereich des Schweißbrenners 10 bzw. direkt im Schweißbrenner 10 angeordnete Drahtvorschubeinrichtung 37 als Master-Antrieb verwendet. Dabei zieht nunmehr der Slave-Antrieb, also die Drahtvorschubeinrichtung 36 im Schweißgerät 1, den Schweißdraht 13 vorzugsweise drehmomentgeregelt aus der Vorratstrommel 14. Der Master-Antrieb, also die Drahtvorschubeinrichtung 37 im Bereich des Schweißbrenners 10, arbeitet dabei die im Draht-Pufferspeicher 35 entstehende Welle geschwindigkeitsgeregelt ab, d.h., dass der Draht-Pufferspeicher 35 fast immer auf Maximum gefüllt ist.

Der Vorteil einer derartigen Anwendung liegt darin, dass die Längenänderung des Schweißdrahtes 13 aufgrund von Verwindungen des Schlauchpakets 10 (=Bowdenzugeffekt) durch den Draht-Pufferspeicher 35 kompensiert wird.

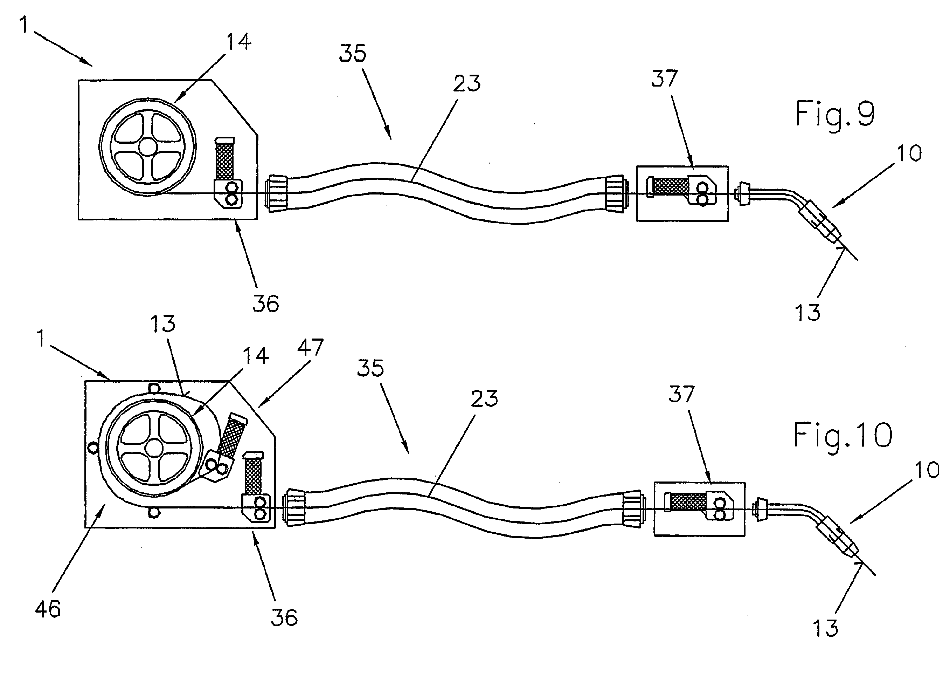

In Fig. 9 ist eine dynamische Drahtförderung dargestellt, bei der der Schweißdraht 13 kraftfrei am Schweißbrenner 10 zur Verfügung steht, d.h., dass auf den Schweißdraht 13 weder Zugnoch Druck-Kräfte von den Drahtvorschubeinrichtungen 36 und 37 einwirken. Dabei wird der Füllstand des Draht-Pufferspeichers 35 bevorzugt neutral gehalten, d.h., dass der Füllstand des Draht-Pufferspeichers 35 auf einem Mittelwert zwischen dem Minimum-und Maximumzustand geregelt wird, wodurch kurzzeitige Schwankungen bei der Drahtförderung vom Draht-Pufferspeicher 35 aufgefangen werden können. Bei dieser Regelung ist eine Vor-Rückwärtsbewegung oder sind unterschiedliche Fördergeschwindigkeiten des Schweißdrahtes 13 möglich, da dies vom Draht-Pufferspeicher 35 aufgenommen werden kann.

Hierzu ist die Drahtvorschubeinrichtung 36 im Schweißgerät 1 als Slave-Antrieb und die im Bereich des Schweißbrenners 10 angeordnete Drahtvorschubeinrichtung 37 als Master-Antrieb ausgebildet. Der Slave-Antrieb zieht dabei den Schweißdraht 13 von der Vorratstrommel 14 und leitet diesen kraftfrei in das Schlauchpaket 23, also in den Draht-Pufferspeicher 35 weiter. Der Master-Antrieb führt eine geregelte Bewegung aus, d.h., die beiden Drahtvorschubeinrichtungen 36 und 37 werden derart geregelt, dass der Füllstand des Draht-Pufferspeichers 35 auf einem ausgeglichenen Niveau gehalten wird, bzw. werden sie immer aufeinander abgestimmt, also werden beide Drahtvorschubeinrichtungen 36, 37 in ihrem Drehmoment oder in ihrer Drehzahl geregelt.

Durch eine derartig dynamisch ausgeglichene Schweißdrahtförderung ist es möglich, dass eine Entkoppelung beider Drahtvorschubeinrichtungen 36 und 37 und damit eine echte sogenannte Push-Pull-Schweißdrahtförderung (Vor-/Rückwärtsförderung) realisiert wird, d.h., dass die vordere Drahtvorschubeinrichtung 36, also in diesem Fall der Master-Antrieb, eine Vorwärts/Rückwärtsförderung des Schweißdrahtes 13 durchführt und somit eine pulsierende Schweißdrahtbewegung gebildet wird. Eine derartige Anwendung einer Push-Pull-Schweißdrahtförderung ist nunmehr aufgrund des speziell ausgebildeten Draht-Pufferspeichers 35 erstmals in der Praxis möglich, da der Schweißdraht 13, nicht wie aus dem Stand der Technik bekannt, durch die gesamte Drahtseele 30, also das gesamte Schlauchpaket 23, zurückgeschoben werden muss, was zu sehr hohen Reibungsverlusten und sehr hoher Trägheit führt, sondern der überschüssige Schweißdraht 13 gleich hinter dem Schweißbrenner 10 in den Draht-Pufferspeicher 35 geschoben wird und somit ein sehr schnelles Umschalten der Förderrichtung möglich ist. Somit kann die Taktzeit für den Push-Pull-Betrieb wesentlich erhöht werden. Dies trifft auch bei einer Schweißdrahtförderung mit unterschiedlicher Fördergeschwindigkeit ein.

Durch die spezielle Anordnung des Draht-Pufferspeichers 35 gleich hinter dem Schweißbrenner 10 entstehen keinerlei bzw. nur sehr geringe Reibungsverluste bei einer Rückwärtsbewegung des Schweißdrahtes 13 durch die Drahtvorschubeinrichtung 37, wodurch das Ansprechverhalten bei einer Drehrichtungsumkehr wesentlich verbessert wird, so dass ein sehr schnelles Umschalten mit einer leistungsschwachen Drahtvorschubeinrichtung 37 möglich ist.

Aus der Schweißanlage in Fig. 10 ist eine Anwendung mit einem aus dem Stand der Technik bekannten Draht-Pufferspeicher 46, der im Schweißgerät 1 angeordnet ist, und dem erfindungsgemäßen Draht-Pufferspeicher 35 im Schlauchpaket 23 gezeigt. Dabei wird der erste Draht-Pufferspeicher 46 derart gebildet, dass der Schweißdraht 1 schlaufenförmig um die Vorratstrommel 14 bzw. die Drahtrolle verläuft und von einer ersten Drahtvorschubeinrichtung 47 von der Vorratstrommel 14 gezogen wird. Anschließend wird über eine weitere im Schweißgerät 1 angeordnete Drahtvorschubeinrichtung 36 der Schweißdraht 1 aus dem Draht-Pufferspeicher 46 im Schweißgerät 1 in das Schlauchpaket 23 und somit in den längsausgebildeten Draht-Pufferspeicher 35 gefördert, von wo er über die Drahtvorschubeinrichtung 37 im Bereich des Schweißbrenners 10 dem Schweißbrenner 10 zugeführt wird.

Durch diesen Aufbau wird erreicht, dass der Schweißdraht 13 kraftfrei in das Schlauchpaket 23 gefördert wird. Dabei wirkt sich der Nachlauf der Drahtrolle bzw. der Vorratstrommel 14 beim Abziehen des Schweißdrahtes 13 von dieser nicht auf die Drahtvorschubeinrichtung 36 zum Einführen des Schweißdrahtes 13 in das Schlauchpaket 23 aus. Hierbei ist es auch möglich, dass die dritte Drahtvorschubeinrichtung 47 entfallen kann und der Schweißdraht 13 direkt von der Drahtvorschubeinrichtung 36 in das Schlauchpaket 23 gefördert wird.

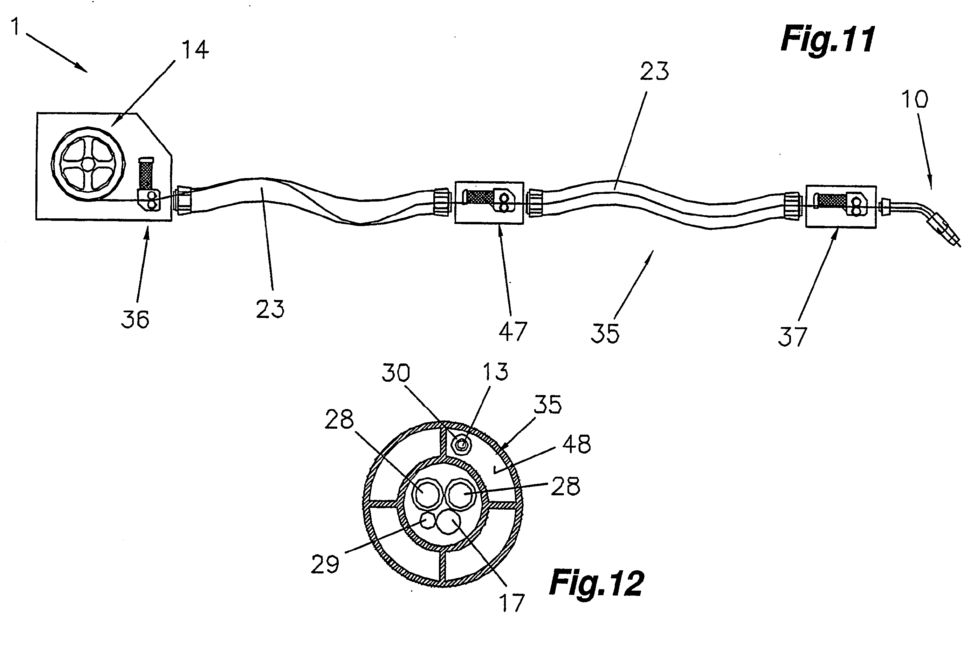

Ein weiteres Anwendungsbeispiel ist in Fig. 11 dargestellt, bei dem mehrere Schlauchpakete 23 beispielsweise unter Zwischenschaltung einer Drahtvorschubeinrichtung 47 aneinander gekoppelt sind. Dabei ist es möglich, dass nur in einem der Schlauchpakete 23, nämlich dem dem Schweißbrenner 10 nächstliegenden, der erfindungsgemäße Draht-Pufferspeicher 35 angeordnet ist.

Selbstverständlich ist es auch möglich, dass der Draht-Pufferspeicher 35 nicht nur durch einen Drahtführungsschlauch 38, wie zuvor beschrieben, aufgebaut werden kann. Hierzu ist es beispielsweise möglich, dass anstelle des Drahtführungsschlauches 38 ein Kanal 48 mit beliebiger Querschnittsform, wie beispielsweise rechteckförmig, dreieckförmig, oval usw., eingesetzt werden, die beispielsweise helix-förmig verlaufen. Ein derartiges Beispiel ist in Fig. 12 ersichtlich. Dabei kann der Kanal 48 unabhängig vom Schlauchpaket 23 oder auch im Schlauchpaket 23 angeordnet werden. Es ist auch möglich, dass mehrere Kanäle 48 oder Drahtführungsschläuche 38 eingesetzt werden, so dass eine Mehrdraht-Schweißanlage aufgebaut werden kann.

Auch ist es möglich, dass ein derartiger Draht-Pufferspeicher 35 ohne Drahtseele 30 aufgebaut werden kann bzw. dass die Drahtseele 30 derart ausgebildet ist, dass der Schweißdraht 13 in dieser einen entsprechenden Bewegungsfreiraum hat, also die Bohrung für den Schweißdraht 13 um das 1,5fache größer ist, als der Außendurchmesser 33 des Schweißdrahtes 13. Bei einem derartigen Aufbau ist es jedoch von Nachteil, dass die Füllstandüberwachung des Draht-Pufferspeichers 35 sehr aufwendig zu realisieren ist.

In den Fig. 13 und 14 ist ein spezielles Ausführungsbeispiel zur Erfassung der Längsbewegung der Drahtseele 30 teilweise geschnitten dargestellt, wobei der Übersicht halber nur die wesentlichen Elemente dargestellt sind. Bei diesen Ausführungsbeispielen wird das Mittel zur Erfassung der Längsbewegung der Drahtseele 35 durch einen Sensor 51 gebildet, der eine berührungslose Messung der Längsbewegung der Drahtseele 30 durchführt.

In Fig. 13 ist eine schaubildliche Darstellung des Sensors 51 mit zugeordneter Drahtvorschubeinrichtung 37 und eingesetzter Drahtseele 30 dargestellt, die im Sensor 51 endet, wogegen in Fig. 14 die Drahtseele 30 durch den Sensor 51 hindurch verläuft.

Der Sensor 51 weist ein Gehäuse 52 auf, wobei sich die Drahtseele 30 direkt in das Gehäuse 52 erstreckt und im Gehäuse 52 ein Auswerteelement 53 angeordnet ist. Die Baugröße des Sensors 51 ist derart ausgelegt, dass der Sensor 51 im Schweißbrenner 10 oder im Schlauchpaket 23 angeordnet werden kann, wobei der Sensor 51 bevorzugt im Schweißbrenner 10, insbesondere im Brennergriff, angeordnet ist.

Weiters ist bei diesem Ausführungsbeispiel an der Drahtseele 30 ein Indikator 54 angeordnet, der starr mit der Drahtseele 30 verbunden ist. Der Indikator 54 besteht beispielsweise aus einem ferromagnetischen Material und bildet den Abschluss der Drahtseele 30 aus, wobei die Drahtseele 30 mit dem abschließenden Indikator 54 im Sensor 51 endet. Um die Längsbewegung der Drahtseele 30 berührungslos ermitteln zu können, besteht das Auswerteelement 53 bevorzugt aus zumindest einer elektrischen Spule 55. Die Wegmessung, also die Längsverschiebung der Drahtseele 30, erfolgt bei diesem Aufbau des Sensors 51 durch Induktionsänderung in der Spule 55, d.h., dass aufgrund der Verschiebung des Indikators 54 sich die Induktivität in den Spulen 55 verändert, so dass von einer angeschlossenen Auswerteeinheit bzw. Steuervorrichtung 4 die Position ermittelt bzw. berechnet werden kann.

Weiters weist der Sensor 51 eine Auslaufdüse 56 für den Schweißdraht 13 auf, deren Öffnung einen Durchmesser aufweist, der nur unwesentlich größer ist, als der Durchmesser des Schweißdrahtes 13. Dadurch wird erzielt, dass die Drahtseele 30 nicht durch die Auslaufdüse 56 austreten kann. Bevorzugt ist die Auslaufdüse 56 über ein Gewinde mit dem Gehäuse 52 verbunden, so dass diese leicht und rasch ausgetauscht werden kann und somit eine Anpassung der Auslaufdüse 56 an den jeweiligen Durchmesser des eingesetzten Schweißdrahtes 13 durchgeführt werden kann.

Die Längsbewegung der Drahtseele 30 wird vom Sensor 51 nach dem Messprinzip der Induktionsänderung der Spule 55 erfasst. Dieses Messprinzip ist bereits aus dem Stand der Technik bekannt, so dass darauf nicht näher eingegangen wird. Selbstverständlich ist es möglich, dass der Sensor 51 nach einem anderen Messprinzip arbeitet und beispielsweise durch einen kapazitiven oder optischen Sensor gebildet wird. Selbstverständlich ist es möglich, dass der Sensor 51 auch für andere Zwecke, bei welchen eine Längsbewegung der Drahtseele 30 erfasst werden soll, eingesetzt werden kann.

Der Sensor 51 wird mit einer Auswerteeinheit bzw. einer Steuervorrichtung 4 des Schweißgerätes 4 über Leitungen (nicht dargestellt) verbunden, so dass die Auswerteeinheit oder die Steuervorrichtung 4 je nach Stellung bzw. Position der Drahtseele 30 bzw. des Indikators 54 im Gehäuse 52 den Füllstand des Draht-Pufferspeichers 35 ermittelt bzw. berechnet.

In Fig. 14 ist ein weiteres Ausführungsbeispiel für den Aufbau des Sensors 51 gezeigt. Dabei wird zum Unterschied des zuvor beschriebenen Ausführungsbeispiels die Drahtseele 30 nunmehr durch das Gehäuse 52 des Sensors 51 geführt. Der Indikator 54 ist wiederum an der Drahtseele 30 befestigt und wird derart positioniert, dass dieser innerhalb des Gehäuses 52 angeordnet ist. Diese Ausführung hat den Vorteil, dass der Sensor 51 nicht mehr nur am Ende der Drahtseele 30 angeordnet werden muss, sondern dieser an jeder beliebigen Stelle im Drahtfördersystem positioniert werden kann. Damit ist ein Einsatz des Sensors 51 bei jedem beliebigen aus dem Stand der Technik bekannten Draht-Pufferspeicher 35 möglich.

Durch den Einsatz eines derartigen Sensors 51 ist es nunmehr möglich, dass von der Steuervorrichtung 4 des Schweißgerätes 1 je nach Vorgabe des Füllstandes die Drahtvorschubeinrichtungen 36, 37 derart angesteuert werden können, dass der Füllstand des Draht-Pufferspeichers 35 geregelt wird.

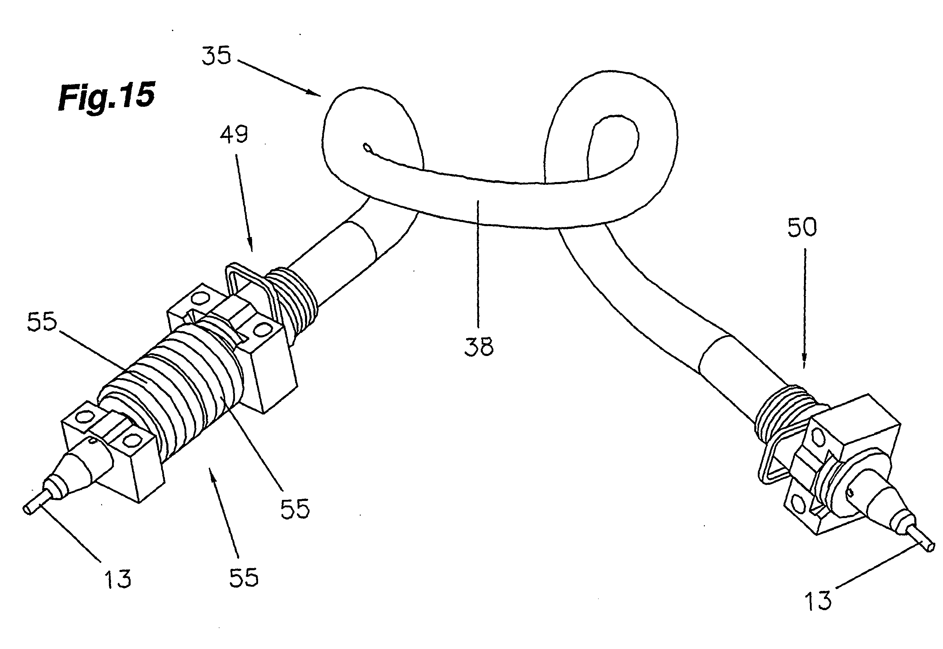

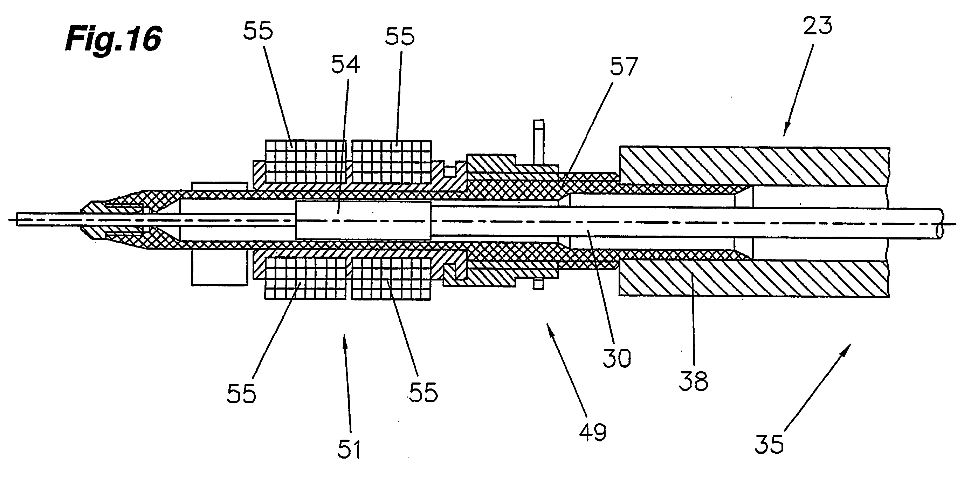

In den Fig. 15 und 16 ist ein weiteres Ausführungsbeispiel für den Aufbau des Draht-Pufferspeichers 35 dargestellt, bei dem der Draht-Pufferspeicher 35 außerhalb des Schlauchpaketes 23 angeordnet ist. Dabei wird, wie bereits in Fig. 4 schematisch dargestellt, der Drahtführungsschlauch 38 um das Schlauchpaket 23 verlegt, wobei der Übersicht halber das Schlauchpaket 23 nicht dargestellt wurde.

Bei diesem Ausführungsbeispiel soll verdeutlicht werden, dass der Draht-Pufferspeicher 35 möglichst einfach ausgetauscht werden kann und der Benutzer keinerlei spezielle Umrüstarbeiten bzw. Anpassungen vornehmen muss.

Dazu ist an beiden Enden des Drahtführungsschlauches 38 ein Abschlusselement, insbesondere ein Schnellverschluss 49, 50, angeordnet, so dass dieser mit einem Zentralanschluss (nicht dargestellt) verbunden werden kann. Der Zentralanschluss kann dabei entsprechend der Anmeldung WO 02/090034 A1 ausgebildet werden, so dass auf den Aufbau des Zentralanschlusses nicht mehr näher eingegangen wird. Der Schnellverschluss 49, 50 ist beispielsweise in Form eines Bajonettverschlusses aufgebaut, wobei der Drahtführungsschlauch 38 beispielsweise in einfacher Form an diesen aufgeklemmt ist.

Der Drahtführungsschlauch 38 mit den damit verbundenen Schnellverschlüssen 49, 50 ist derart ausgebildet, dass die darin eingezogene Drahtseele 30 (nicht dargestellt) für den Schweißdraht 13 innerhalb dieser Einheit aus Drahtführungsschlauch 38 und Schnellverschluss 49, 50 endet. Dadurch wird erreicht, dass der Draht-Pufferspeicher 35 durch eine Baueinheit aus Drahtführungsschlauch 38 mit den daran befestigten Schnellverschlüssen 49, 50 und der Drahtseele 30 gebildet wird, die in einem Arbeitsschritt durch einfaches Verbinden des Schnellverschlusses 49, 50 mit dem Zentralanschluss und anschließendes Umwickeln um das Schlauchpaket 23 montiert bzw. getauscht werden kann.

Der Schnellverschluss 49 auf der Seite des Schweißbrenners 10 ist derart aufgebaut, dass ein Führungselement 57 durch den Zentralanschluss hindurchragt, wobei das Führungselement 57 direkt im Sensor 51 mündet, so dass der Sensor 51 gemäß Fig. 13 eingesetzt werden kann. Dabei nimmt jedoch der Sensor 51 zum Unterschied zu Fig. 13 nicht nur die Drahtseele 30 auf, sondern ist derart ausgelegt, dass er das Führungselement 57 des Schnellverschlusses 49 aufnehmen kann. Die Funktion zur Messung der Position der Drahtseele 30, gemäß Fig. 13, bleibt jedoch erhalten, da in dem Führungselement 57 die Drahtseele 30 mit dem Indikator 54 angeordnet ist und somit wiederum eine Induktionsänderung in der Spule 55 stattfindet. Bevorzugt wird hierbei das Führungselement 57 aus einem nichtmagnetischen Material, wie beispielsweise Messing, gebildet.

Bei dem weiteren Schnellverschluss 50, der im Bereich des Schweißgerätes 1 bzw. des externen Drahtvorschubgerätes 11, angewendet wird, ist wiederum ein Führungselement angeordnet, das jedoch nunmehr die Aufgabe hat, die Drahtseele 30 am Schnellverschluss 50 zu befestigen, wobei auf die Darstellung des Aufbaus verzichtet wurde. Hierzu wird in einfacher Form eine Klemmverbindung realisiert bzw. eingesetzt, bei der durch Aufdrehen einer Überwurfmutter die Drahtseele 30 im Führungselement fixiert wird. Dabei ist es möglich, dass die Drahtseele 30 aus dem Führungselement herausragen kann, so dass beim Befestigen des Schnellverschlusses die Drahtseele 30 in das Schweißgerät 1 bzw. das externe Drahtvorschubgerät 11 hineinragt.

Vorteilhaft ist somit, dass durch diese einzige Einheit, bestehend aus Drahtführungsschlauch 38, den Schnellverschlüssen 49, 50 und der Drahtseele 30 mit dem Indikator 54, diese sehr rasch und ohne zusätzliche Arbeitsschritte durch einfaches Verbinden der Schnellverschlüsse mit der Zentraleinheit montiert und getauscht werden kann. Damit vom Benutzer der Drahtführungsschlauch 38 helix-förmig bzw. spiral-förmig verlegt wird, wird bei der Herstellung und Auslieferung dieser Einheit eine Vorverformung des Drahtführungsschlauches 38 vorgenommen, d.h., dass der Drahtführungsschlauch 38 ohne Montage am Schlauchpaket 23 bereits die helix-förmige bzw. spiral-förmige Form aufweist, so dass der Benutzer nur mehr entsprechend den vorgegebenen Windungen des Drahtführungsschlauches 38 diesen um das Schlauchpaket 23 winden muss. Somit kann der Draht-Pufferspeicher 35 werkzeuglos bzw. ohne Hilfsmittel einfach getauscht werden.

Weiters ist es möglich, dass bei längeren Schlauchpaketen 23 der Drahtführungsschlauch 38 mit dem größeren Querschnitt nicht über den gesamten Bereich verlaufen muss, sondern, dass entsprechend des benötigten Puffervolumens nur ein Teilbereich des Drahtführungsschlauches 38 einen derart großen Querschnitt 39 aufweist und der übrige Verlauf entsprechend dem Stand der Technik ausgebildet ist.

## Patentansprüche

1. Puffervorrichtung für einen Schweißdraht (13), wobei zwischen einer Drahtvorschubeinrichtung (36) am Schweißgerät (1) oder einem externen Drahtvorschubgerät und einer weiteren Drahtvorschubeinrichtung (37), die bevorzugt im Bereich eines Schweißbrenners (10) oder im Schweißbrenner (10) angeordnet werden kann, ein Draht-Pufferspeicher (35), angeordnet ist und der Schweißdraht (13) zwischen den beiden Drahtvorschubeinrichtungen (36, 37) in einer Drahtseele (30) geführt werden kann, und mit einem Drahtführungsschlauch (38), und einer Drahtseele (30) versehen ist, wobei der Draht-Pufferspeicher (35) derart gebildet ist, dass die Drahtseele (30) an einem Ende befestigt bzw. fixiert ist und dessen anderes Ende frei beweglich ist, **dadurch gekennzeichnet, dass** die Drahtseele (30) zumindest in einem Teilbereich in dem helix-förmig bzw. spiral-förmig vorverformt verlaufenden Drahtführungsschlauch (38) mit größerem Querschnitt (39) bzw. Innendurchmesser als ein Querschnitt bzw. Außendurchmesser (33) der Drahtseele (30) frei beweglich angeordnet ist und dass das Speichervolumen des Draht-Pufferspeichers (35) durch den Querschnitt (39) und die Länge des Drahtführungsschlauches (38) definiert ist.

2. Puffervorrichtung nach Anspruch 1, **dadurch gekennzeichnet, dass** die Drahtseele (30) im Bereich des Schweißgerätes (1) oder des externen Drahtvorschubgerätes (11) befestigt bzw. fixiert ist.

3. Puffervorrichtung nach Anspruch 1 oder 2, **dadurch gekennzeichnet, dass** der Innendurchmesser oder Querschnitt (39) des Drahtführungsschlauches (38) mindestens 1,5 mal größer ist, als ein Außendurchmesser (33) der Drahtseele (30).

4. Puffervorrichtung nach einem der Ansprüche 1 bis 3, **dadurch gekennzeichnet, dass** der Drahtführungsschlauch (38) in einem Schlauchpaket (23) angeordnet ist.

5. Puffervorrichtung nach einem der Ansprüche 1 bis 4, **dadurch gekennzeichnet, dass** der Drahtführungsschlauch (38) im Schlauchpaket (23) verläuft.

6. Puffervorrichtung nach Anspruch 5, **dadurch gekennzeichnet, dass** im Schlauchpaket (23) angeordnete weitere Leitungen innerhalb des helix-förmigen bzw. spiral-förmig verlaufenden Drahtführungsschlauches (38) angeordnet sind.

7. Puffervorrichtung nach einem der Ansprüche 1 bis 3, **dadurch gekennzeichnet, dass** der Drahtführungsschlauch (38) außerhalb eines Schlauchpaketes (23) angeordnet ist.

8. Puffervorrichtung nach Anspruch 7, **dadurch gekennzeichnet, dass** der Drahtführungsschlauch (38) um das Schlauchpaket (23) angeordnet ist.

9. Puffervorrichtung nach Anspruch 7, **dadurch gekennzeichnet, dass** der Drahtführungsschlauch (38) unabhängig vom Schlauchpaket (23) um ein Trägermaterial verlaufend angeordnet ist.

10. Puffervorrichtung nach einem der Ansprüche 1 bis 9, **dadurch gekennzeichnet, dass** Mittel zum Erfassen des Füllstandes bzw. der Menge des Schweißdrahtes (13) des Draht-Pufferspeichers (35) angeordnet sind, wobei von dem Erfassungsmittel die Längsbewegung der Drahtseele (30), insbesondere des freien Endes der Drahtseele (30), ermittelt wird.

11. Puffervorrichtung nach einem der Ansprüche 1 bis 10, **dadurch gekennzeichnet, dass** der Draht-Pufferspeicher (35) durch eine Baueinheit aus dem Drahtführungsschlauch (38), an dem an beiden Enden ein Abschlusselement, insbesondere ein Schnellverschluss (49, 50), angeordnet ist, und der Drahtseele (30) gebildet ist.

12. Puffervorrichtung nach einem der Ansprüche 1 bis 11, **dadurch gekennzeichnet, dass** der Draht-Pufferspeicher (35) werkzeuglos austauschbar ist.

13. Puffervorrichtung nach Anspruch 11 oder 12, **dadurch gekennzeichnet, dass** ein Führungselement (57) des Abschlusselementes, insbesondere des Schnellverschlusses (49, 50), in einen Sensor (51) zur Erfassung der Längsbewegung der Drahtseele (30) hineinragt.

14. Puffervorrichtung nach einem der Ansprüche 1 bis 13, **dadurch gekennzeichnet, dass** der Drahtführungsschlauch (38) helix-förmig bzw. spiral-förmig vorgeformt ist.

15. Schweißanlage, mit einem Schweißgerät (1), einem Schlauchpaket (23) und einem Schweißbrenner (10), wobei das Schlauchpaket (23) den Schweißbrenner (10) mit dem Schweißgerät (1) verbindet, und einer als Draht-Pufferspeicher (35) ausgebildeten Vorrichtung, die zwischen zwei Drahtvorschubeinrichtungen (36, 37) angeordnet ist, wobei die Vorrichtung bzw, der Draht - Pufferspeicher (35) nach einem oder mehreren der Ansprüche 1 bis 14 ausgebildet ist, wobei der Schweißdraht (13) zwischen den beiden Drahtvorschubeinrichtungen (36, 37) in einer Drahtseele (30) geführt ist, und der Draht-Pufferspeicher (35) derart gebildet ist, dass die Drahtseele (30) an einem Ende befestigt bzw. fixiert ist und dessen anderes Ende frei beweglich ist, **dadurch gekennzeichnet, dass** die Vorrichtung bzw. der Draht-Pufferspeicher (35) derart gebildet ist, dass die Drahtseele (30) mit dem Schweißdraht (13) zumindest in einem Teilbereich in einem helixförmig bzw. spiral-förmig vorverformt verlaufenden Drahtführungsschlauch (38) mit größerem Querschnitt (39) bzw. Innendurchmesser als ein Querschnitt bzw. Außendurchmesser (33) der Drahtseele (30) frei beweglich angeordnet ist, dass das Speichervolumen des Draht-Pufferspeichers (35) durch den Querschnitt (39) und die Länge des Drahtführungsschlauches (38) definiert ist, und dass die Vorrichtung bzw. der Draht-Pufferspeicher (35) im oder um das Schlauchpaket (23) ausgebildet ist.

16. Schweißanlage nach Anspruch 15, **dadurch gekennzeichnet, dass** die Vorrichtung bzw. der Draht-Pufferspeicher (35) nach einem oder mehreren der Ansprüche 1 bis 14 ausgebildet ist.

## Claims

1. A buffer device for a welding wire (13), wherein a wire buffer, in particular a wire buffer storage (35), is arranged between a wire feeder (36) provided on the welding apparatus (1), or an external wire feeding means, and a further wire feeder (37) preferably arranged in the region of a welding torch (10), or within the welding torch (10), and the welding wire (13) is conducted between the two wire feeders (36, 37) within a wire core (30), wherein the wire buffer storage (35) is designed in a manner that the wire core (30) is fastened or fixed on one end, with its other end being freely movable, **characterized in that** the wire core (30) together with the welding wire (13), at least over a partial region, is arranged to be freely movable within a wire guide hose (38) extending in a helically or spirally pre-deformed manner and having a larger cross section (39) or inner diameter than a cross section or outer diameter (33) of the wire core (30), and that the storage volume of the wire buffer storage (35) is defined by the cross section (39) and length of the wire guide hose (38).

2. A buffer device according to claim 1, **characterized in that** the wire core (30) is fastened or fixed in the region of the welding apparatus (1) or the external wire feeding means (11).

3. A buffer device according to claim 1 or 2, **characterized in that** the inner diameter or cross section (39) of the wire guide hose (38) is at least 1.5 times larger than an outer diameter (33) of the wire core (30).

4. A buffer device according to any one of claims 1 to 3, **characterized in that** the wire guide hose (38) is arranged within a hose package (23).

5. A buffer device according to any one of claims 1 to 4, **characterized in that** the wire guide hose (38) extends within said hose package (23).

6. A buffer device according to claim 5, **characterized in that** further lines arranged within the hose package (23) are arranged within the helically or spirally extending wire guide hose (38).

7. A buffer device according to any one of claims 1 to 3, **characterized in that** the wire guide hose (38) is arranged outside a hose package (23).

8. A buffer device according to claim 7, **characterized in that** the wire guide hose (38) is arranged around the hose package (23).

9. A buffer device according to claim 7, **characterized in that** the wire guide hose (38) is arranged to extend about a carrier material independently of the hose package (23).

10. A buffer device according to any one of claims 1 to 9, **characterized in that** means for detecting the filling level or quantity of the welding wire (13) of the wire buffer storage (35) are arranged, said detection means detecting the longitudinal movement of the wire core (30) and, in particular, the free end of the wire core (30).

11. A buffer device according to any one of claims 1 to 10, **characterized in that** the wire buffer storage (35) is comprised of a structural unit comprising the wire guide hose (38), on both ends of which a terminal element, particularly a quick lock (49, 50) is arranged, and the wire core (30).

12. A buffer device according to any one of claims 1 to 11, **characterized in that** the wire buffer storage (35) is exchangeable without tool.

13. A buffer device according to claim 11 or 12, **characterized in that** a guide element (57) of the terminal element, particularly quick lock (49, 50), projects into a sensor (51) for detecting the longitudinal movement of the wire core (30).

14. A buffer device according any one of claims 1 to 13, **characterized in that** the wire guide hose (38) is preformed in a helix-shaped or spiral-shaped manner.

15. A welding plant including a welding apparatus (1), a hose package (23) and a welding torch (10), wherein the hose package (23) connects the welding torch (10) with the welding apparatus (1), and a device designed as a wire buffer storage (35) and arranged between two wire feeders (36, 37), wherein the welding wire (13) is conducted between the two wire feeders (36, 37) within a wire core (30), and the wire buffer storage (35) is designed in a manner that the wire core (30) is fastened or fixed on one end, with its other end being freely movable, **characterized in that** the device or wire buffer storage (35) is formed in such a manner that the wire core (30) together with the welding wire (13), at least over a partial region, is arranged to be freely movable within a wire guide hose (38) extending in a helically or spirally pre-deformed manner and having a larger cross section (39) or inner diameter than a cross section or outer diameter (33) of the wire core (30), that the storage volume of the wire buffer storage (35) is defined by the cross section (39) and length of the wire guide hose (38), and that the device or wire buffer storage (35) is formed in or around the hose package (23).

16. A welding plant according to claim 15, **characterized in that** said device or wire buffer storage (35) is designed according to one or several of claims 1 to 14.

## Revendications

1. Dispositif tampon pour un fil de soudure (13), dans lequel un réservoir tampon de fil (35) est disposé entre un dispositif d'avancement de fil (36) se trouvant sur le poste de soudure (1) ou un appareil externe d'avancement de fil et un autre dispositif d'avancement de fil (37), qui peut être disposé de préférence dans la zone d'un chalumeau de soudage (10) ou dans le chalumeau de soudage (10), et dans lequel le fil de soudure (13) peut être guidé entre les deux dispositifs d'avancement de fil (36, 37) à l'intérieur d'une âme de fil (30) et est pourvu d'un tuyau guide-fil (38) et d'une âme de fil (30), le réservoir tampon de fil (35) étant formé de sorte que l'âme de fil (30) soit attaché ou fixé par une extrémité et que son autre extrémité soit en mouvement libre, **caractérisé en ce que** l'âme de fil (30) est disposé de façon à être en mouvement libre dans au moins une zone partielle au sein du tuyau guide-fil (38) au tracé hélicoïdal ou spiroïdal préformé ayant une coupe transversale (39) ou un diamètre interne qui est supérieur(e) à une coupe transversale ou à un diamètre externe (33) de l'âme de fil (30) et **en ce que** le volume de réserve du réservoir tampon de fil (35) est défini par la coupe transversale (39) et la longueur du tuyau guide-fil (38).

2. Dispositif tampon selon la revendication 1, **caractérisé en ce que** l'âme de fil (30) est attaché ou fixé dans la zone du poste de soudage (1) ou de l'appareil externe d'avancement de fil (11).

3. Dispositif tampon selon la revendication 1 ou 2, **caractérisé en ce que** le diamètre interne ou la coupe transversale (39) du tuyau guide-fil (38) est au moins 1,5 fois plus grand(e) qu'un diamètre externe (33) de l'âme de fil (30).

4. Dispositif tampon selon l'une quelconque des revendications 1 à 3, **caractérisé en ce que** le tuyau guide-fil (38) est disposé dans un paquet de tuyaux (23).

5. Dispositif tampon selon l'une quelconque des revendications 1 à 4, **caractérisé en ce que** le tuyau guide-fil (38) suit un parcours le long de l'intérieur du paquet de tuyaux. (23).

6. Dispositif tampon selon la revendication 5, **caractérisé en ce que** d'autres conduites disposées dans le paquet de tuyaux (23) y sont disposées à l'intérieur du tuyau guide-fil (38) au tracé hélicoïdal ou spiroïdal.

7. Dispositif tampon selon l'une quelconque des revendications 1 à 3, **caractérisé en ce que** le tuyau guide-fil (38) est disposé à l'extérieur d'un paquet de tuyaux (23).

8. Dispositif tampon selon la revendication 7, **caractérisé en ce que** le tuyau guide-fil (38) est disposé autour du paquet de tuyaux (23).

9. Dispositif tampon selon la revendication 7, **caractérisé en ce que** le tuyau guide-fil (38) est disposé, le long de son tracé, autour d'un matériau de support, indépendamment du paquet de tuyaux (23).

10. Dispositif tampon selon l'une quelconque des revendications 1 à 9, **caractérisé en ce que** des moyens sont aménages pour capter le niveau de remplissage ou la quantité de fil de soudure (13) du réservoir tampon de fil (35), lesquels moyens de captage déterminent le déplacement longitudinal de l'âme de fil (30), en particulier de l'extrémité libre de l'âme de fil (30).

11. Dispositif tampon selon l'une quelconque des revendications 1 à 10, **caractérisé en ce que** le réservoir tampon de fil (35) est formé par un élément de composant du tuyau guide-fil (38), aux deux extrémités duquel est disposé un élément de fermeture, en particulier une fermeture rapide (49, 50), et par l'âme de fil (30).

12. Dispositif tampon selon l'une quelconque des revendications 1 à 11, **caractérisé en ce que** le réservoir tampon de fil (35) peut être changé sans outillage.

13. Dispositif tampon selon la revendication 11 ou 12, **caractérisé en ce qu'**un élément de guidage (57) de l'élément de fermeture, en particulier de la fermeture rapide (49, 50), s'avance jusque dans un capteur (51) pour capter le déplacement longitudinal de l'âme de fil (30).

14. Dispositif tampon selon l'une quelconque des revendications 1 à 13, **caractérisé en ce que** le tuyau guide-fil (38) est préformé de forme hélicoïdale ou spiroïdale.

15. Installation de soudure avec un poste de soudure, un paquet de tuyaux (23) et un chalumeau de soudage (10), dans laquelle le paquet de tuyaux (23) relie le chalumeau de soudage (10) au poste de soudure (1), et avec un dispositif se présentant sous la forme d'un réservoir tampon de fil (35) qui est disposé entre deux dispositifs d'avancement de fil (36, 37), dans laquelle le dispositif ou le réservoir tampon de fil (35) est formé selon une ou plusieurs des revendications 1 à 14, dans laquelle le fil de soudure (13) est guidé entre les deux dispositifs d'avancement de fil (36, 37) à l'intérieur d'une âme de fil (30) et le réservoir tampon de fil (35) est formé de sorte que l'âme de fil (30) soit attaché ou fixé par une extrémité et que son autre extrémité soit en mouvement libre, **caractérisée en ce que** le dispositif ou le réservoir tampon de fil (35) est formé de manière que l'âme de fil (30) est disposé, avec le fil de soudure, de façon à être en mouvement libre dans au moins une zone partielle au sein du tuyau guide-fil (38) au tracé hélicoïdal ou spiroïdal préformé ayant une coupe transversale (39) ou un diamètre interne qui est supérieur(e) à une coupe transversale ou à un diamètre externe (33) de l'âme de fil (30), **en ce que** le volume de réserve du réservoir tampon de fil (35) est défini par la coupe transversale (39) et la longueur du tuyau
guide-fil (38) et **en ce que** le dispositif ou le réservoir tampon de fil (35) est disposé à l'intérieur ou autour du paquet de tuyaux (23).

16. Installation de soudage selon la revendication 15, **caractérisée en ce que** le dispositif ou le réservoir tampon de fil (35) est formé selon une ou plusieurs des revendications 1 à 14.
